# EUROPÄISCHE PATENTSCHRIFT

(11) **EP 2 860 515 B1**
(45) Veröffentlichungstag und Bekanntmachung des Hinweises auf die Patenterteilung: **23.06.2021**
(21) Anmeldenummer: 13004851.5
(22) Anmeldetag: 09.10.2013
(51) Int. Cl.: G01N 21/952

(54) **Inspektionseinrichtung, Verfahren zur optischen Inspektion einer Oberfläche eines zylindrischen Gegenstands und digitale Tintenstrahldruckeinrichtung**
Inspection device, method for the optical inspection of a surface of a cylindrical object and digital ink jet printing device
Dispositif d'inspection, procédé d'inspection optique d'une surface d'un objet cylindrique et dispositif d'impression jet d'encre numérique

(43) Veröffentlichungstag der Anmeldung: 15.04.2015
(73) Patentinhaber: HINTERKOPF GmbH, 73054 Eislingen (DE); DeCoSystem S.r.l., 50041 Calenzano (FI) (IT)
(72) Erfinder: Drexler, Stefan, 73337 Bad Überkingen (DE); Reinhold, Jochen, 73116 Wäschenbeuren (DE); Schulz, Joachim, 73326 Deggingen (DE); Weber, Joachim, 73342 Bad Ditzenbach (DE)
(74) Vertreter: Patentanwälte Magenbauer & Kollegen Partnerschaft mbB

(56) Entgegenhaltungen:
- EP-A1- 2 799 848
- EP-B1- 1 769 916
- WO-A1-2013/087649
- US-A1- 2009 109 430
- US-A1- 2010 188 500

## Beschreibung

Die Erfindung betrifft eine Inspektionseinrichtung für eine optische Inspektion einer Oberfläche eines zumindest im Wesentlichen zylindrischen Gegenstands. Ferner betrifft die Erfindung ein Verfahren zur optischen Inspektion einer Oberfläche eines zylindrischen Gegenstands sowie eine digitale Tintenstrahldruckeinrichtung für eine Bedruckung einer Oberfläche eines zylindrischen Gegenstands mit einem Dekor.

Aus der EP 1 769 916 B1 ist eine Vorrichtung zur Bearbeitung einer Oberfläche eines im Wesentlichen zylindrischen Gegenstands bekannt, die eine Zeilenkamera zur Abtastung der Zylinderoberfläche des Gegenstands sowie eine Sensoreinrichtung zur Ermittlung der rotatorischen Lage des Gegenstands gegenüber der Zeilenkamera umfasst.

Aus der WO 2013/087649 A1 sind ein System und ein Verfahren zum Untersuchen eines Stroms von Produkten bekannt, bei denen fokussierte Lichtstrahlen zweier Lichtquellen, die Licht unterschiedlicher Wellenlänge abgeben, zum Abtasten des Produktstroms sowie zwei Kameras zum Erfassen von Lichtstrahlen, die von dem gescannten Produktstrom reflektiert werden, vorgesehen sind, wobei die Abtastbewegung der fokussierten Lichtstrahlen mit der Belichtungszeit der Kameras synchronisiert werden und wobei die Kameras eine Empfindlichkeit für jeweils eine der von den beiden Lichtquellen abgegebenen Wellenlängen aufweist.

Aus der EP 2 799 848 A1 ist eine Erscheinungsbild-Sichtprüfungsvorrichtung bekannt, die folgende Komponenten umfasst: ein erstes Beleuchtungsmittel zum Werfen eines Spaltlichts mit einer Zwischenwellenlänge von drei Arten von Lichtern mit voneinander verschiedenen Wellenlängen auf eine Oberfläche einer zu prüfenden Probe; ein erstes Abbildungsmittel zum Erfassen von Reflexionsleuchtdichtedaten auf der Oberfläche der Probe durch Empfangen von reflektiertem Licht des Spaltlichts; ein zweites Beleuchtungsmittel zum Werfen von zwei Lichtern mit anderen Wellenlängen als die Zwischenwellenlänge auf eine andere Position auf der Probenoberfläche als eine durch das Spaltlicht beleuchteten Position, und zwar aus zwei unterschiedlichen Richtungen, um dadurch die beiden Lichter miteinander zu überlagern; ein zweites Abbildungsmittel zum Erfassen von Oberflächendaten auf der Probenoberfläche durch Empfangen von reflektiertem Licht aus der Position, wo die beiden Lichter miteinander überlagert sind; ein Formsichtprüfungsmittel, das eine Ebenendatenerzeugungseinheit einschließt, die aus den Reflexionsleuchtdichtedaten Grünkomponentenbilder erzeugt; ein Farbkomponentenzerlegungsmittel, das ein durch das zweite Abbildungsmittel aufgenommenes 2D-Oberflächenbild der Oberfläche in eine Rotkomponente und eine Blaukomponente zerlegt, wodurch ein Rotkomponentenbild und ein Blaukomponentenbild erzeugt werden; ein Unebenheitenfehler-Ermittlungsmittel zum Ermitteln des Vorliegens oder Fehlens von Oberflächenunebenheiten aus einem Verhältnis zwischen Intensitäten der beiden Lichter, die in den Oberflächendaten enthalten sind; ein Fremdfarbdefekt-Ermittlungsmittel zum Ermitteln von Änderungen des Farbtons auf der Probenoberfläche durch Normieren des Grünkomponentenbildes, das durch das erste Abbildungsmittel aufgenommen wurde, des Rotkomponentenbildes und des Blaukomponentenbildes, die durch das Farbkomponentenzerlegungsmittel erzeugt wurden, und Synthetisieren des normierten Grünkomponentenbildes, Rotkomponentenbildes und Blaukomponentenbildes zu einem 2D-Farbbild; und ein Glanzfehler-Ermittlungsmittel zum Ermitteln von Glanz auf der Probenoberfläche auf der Grundlage des Vorliegens oder Fehlens von Oberflächenunebenheiten und der Änderungen des Farbtons.

Die Aufgabe der Erfindung besteht darin, eine Inspektionseinrichtung, ein Verfahren zur optischen Inspektion einer Oberfläche eines zylindrischen Gegenstands sowie eine digitale Tintenstrahldruckeinrichtung für eine Bedruckung einer Oberfläche eines zylindrischen Gegenstands mit einem Dekor bereitzustellen, bei denen die Qualität eines auf den Gegenstand aufgebrachten Dekors, insbesondere eines im Tintenstrahldruck erzeugten Druckbilds, präzise und schnell ermittelt werden kann.

Diese Aufgabe wird gemäß einem ersten Erfindungsaspekt für eine Inspektionseinrichtung der eingangs genannten Art mit den Merkmalen des Anspruchs 1 gelöst. Hierbei ist vorgesehen, dass die Inspektionseinrichtung eine erste Kamera zur Abtastung eines ersten Oberflächenbereichs eines zylindrischen Gegenstands mit einem ersten Abtastausschnitt, der eine erste, linienartige Abtastgeometrie aufweist und eine zweite Kamera zur Abtastung eines zweiten Oberflächenbereichs des gleichen zylindrischen Gegenstands mit einem zweiten Abtastausschnitt, der eine zweite, flächige Abtastgeometrie aufweist, sowie eine Verarbeitungseinrichtung, die mit der ersten und mit der zweiten Kamera elektrisch verbunden ist und die zur Verarbeitung von Abtastsignalen der ersten und zweiten Kamera ausgebildet ist, umfasst, wobei die erste Kamera und die Steuereinrichtung derart ausgebildet sind, dass eine Abtastrate der ersten Kamera von der Steuereinrichtung an eine Winkelgeschwindigkeit des zylindrischen Gegenstands angepasst wird, so dass aufeinanderfolgende linienförmige Abtastausschnitte zu einem vollständigen Gesamtbild von der Oberfläche des zylindrischen Gegenstands verarbeitet werden.

Als zumindest im Wesentlichen zylindrische Gegenstände im Sinne der Patentanmeldung sollen exemplarisch hülsenförmige Behälterrohlinge, insbesondere Tuben-Rohlinge oder Aerosoldosen-Rohlinge, verstanden werden, die zumindest bereichsweise mit einer zylindrischen Hüllkurve beschrieben werden können. Derartige Behälterrohlinge werden vorzugsweise aus Kunststoff oder Metall, insbesondere Aluminium, hergestellt und können zumindest bereichsweise mit einem kreisförmigen Querschnitt ausgebildet sein. Mit Hilfe der Inspektionseinrichtung soll eine Erfassung einer Bearbeitungsqualität der zylindrischen Gegenstände vorgenommen werden, beispielsweise eine Ermittlung einer Druckqualität eines auf den zylindrischen Gegenstand aufgebrachten Dekors. Typischerweise wird die Oberfläche des zylindrischen Gegenstands in mehreren, aufeinanderfolgenden Bearbeitungsschritten in einen Zustand gebracht, der mit Hilfe der Inspektionseinrichtung kontrolliert werden soll. Dementsprechend ist für eine Bewertung der Bearbeitungsqualität für die zu inspizierende Oberfläche zum einen die Fragestellung zu beantworten, ob die gesamte zu bearbeitende Oberfläche des zylindrischen Gegenstands auch tatsächlich bearbeitet, beispielsweise bedruckt, wurde. Zum anderen ist die Fragestellung zu beantworten, ob die Oberflächenbearbeitung für den zylindrischen Gegenstand zu dem gewünschten Bearbeitungsergebnis, beispielsweise zu einer vorgegebenen Druckqualität, geführt hat. Erfindungsgemäß ist vorgesehen, die erste Fragestellung der vollständigen Bearbeitung der Oberfläche des zylindrischen Gegenstands mit Hilfe der ersten Kamera zu klären. Die erste Kamera weist eine linienartige Abtastgeometrie auf und kann bei einer Rotation des zylindrischen Gegenstands um eine Rotationsachse, die vorzugsweise einer Rotationssymmetrieachse des Gegenstands entspricht, bei geeigneter Ansteuerung eine Vielzahl von linienförmigen Einzelbildern der Oberfläche des zylindrischen Gegenstands ermitteln. Diese linienförmigen Einzelbilder werden in der Verarbeitungseinrichtung zu einem Gesamtbild von der Oberfläche des zylindrischen Gegenstands zusammengesetzt. Besonders vorteilhaft ist es hierbei, wenn die linienartige Abtastgeometrie eine Ausdehnung aufweist, die einer axialen Ausdehnung des zu überprüfenden Oberflächenbereichs des zylindrischen Gegenstands längs der Rotationsachse für den zylindrischen Gegenstand entspricht, so dass mit einer Umdrehung des zylindrischen Gegenstands um die Rotationsachse eine vollständige Abtastung der interessierenden Oberflächenbereiche erzielt werden kann. Demgegenüber ist die zweite Kamera für eine stichprobenartige Betrachtung eines zweiten Abtastausschnitts mit flächiger Abtastgeometrie vorgesehen. Durch eine Analyse des von der zweiten Kamera ermittelten Bilds dieses Abtastausschnitts soll in der Art einer Stichprobe festgestellt werden, ob die Oberflächenbearbeitung des zylindrischen Gegenstands gemäß einer vorgegebenen Mindestqualität vorgenommen wurde. Ist beispielsweise eine Bedruckung der Oberfläche des zylindrischen Gegenstands vorgesehen, so dient die erste Kamera zur Feststellung, ob die vorgegebene Bedruckung tatsächlich über alle vorgesehenen Oberflächenbereiche des zylindrischen Gegenstands hinweg erfolgt ist. Die zweite Kamera wird hingegen dazu eingesetzt, die Qualität des Druckbilds an einer vorgegebenen Stelle zu ermitteln, um beispielsweise Passerfehler zwischen den einzelnen Farben der Bedruckung für den zylindrischen Gegenstand feststellen zu können. Die bei der optischen Inspektion der Oberfläche des zylindrischen Gegenstands gewonnenen Informationen können beispielsweise an eine Druckeinrichtung oder eine anders geartete Bearbeitungseinrichtung zur Verfügung gestellt werden, um möglicherweise aufgetretene Bearbeitungsfehler zumindest teilweise ausgleichen zu können. Ergänzend oder alternativ können die im Rahmen der optischen Inspektion gewonnenen Informationen auch an eine Sortiereinrichtung weitergegeben werden, die eine Sortierung der inspizierten zylindrischen Gegenstände in verschiedene Qualitätsstufen wie beispielweise gut/schlecht vorzunehmen und als schlecht qualifizierte Gegenstände auszusortieren.

Vorteilhafte Weiterbildungen der Erfindung sind Gegenstand der Unteransprüche.

Zweckmäßig ist es, wenn eine optische Achse der ersten Kamera und eine optische Achse der zweiten Kamera einen spitzen Winkel zu einander einnehmen. Jede der beiden Kameras weist einen Bildaufnehmer, insbesondere einen CCD-Chip oder einen CMOS-Chip, auf. Der Bildaufnehmer ist für eine Wandlung von eintreffenden Lichtstrahlen in elektrische Signale ausgebildet. Dem Bildaufnehmer ist ein optisches System zugeordnet, das aus wenigstens einer Linse besteht, die die Aufgabe hat, eintreffende Lichtstrahlen in geeigneter Weise auf den Bildaufnehmer zu lenken. Die optische Achse ist diejenige gedachte gerade Linie, die durch den Mittelpunkt der wenigstens einen Linse des optischen Systems geht und auf den Bildaufnehmer trifft und einem Lichtstrahl entspricht, der von außen durch das optische System auf den Bildaufnehmer trifft, ohne gebrochen oder abgelenkt zu werden. Aufgrund der vorgesehenen Ausrichtung der beiden optischen Achsen der ersten und zweiten Kamera wird eine vorteilhafte Ausrichtung der Kameras gegenüber dem zylindrischen Gegenstand gewährleistet. Dabei wird davon ausgegangen, dass sich die optische Achse ausgehend vom zylindrischen Gegenstand durch das jeweilige optische System bis zum jeweiligen Bildaufnehmer erstreckt.

Bei einer Weiterbildung der Erfindung ist vorgesehen, dass ein Schnittpunkt der optischen Achsen der ersten und zweiten Kamera in einem zylindrischen Raumvolumen angeordnet ist, das einer räumlichen Ausdehnung des abzutastenden zylindrischen Gegenstands entspricht. Besonders vorteilhaft ist es, wenn die optischen Achsen jeweils in normaler Richtung von der Oberfläche des zylindrischen Gegenstands ausgehen, da hierdurch eine besonders verzerrungsarme Abtastung des Gegenstands gewährleistet werden kann. Weiterhin ist vorteilhaft, wenn beide optischen Achsen von einer Rotationssymmetrieachse des zylindrischen Gegenstands ausgehen.

Bevorzugt ist vorgesehen, dass die erste Kamera wenigstens eine, insbesondere genau eine, Zeile von aneinander gereihten lichtempfindlichen Zellen umfasst, wobei die lichtempfindlichen Zellen einer Zeile eine Hauptachse der ersten Abtastgeometrie bestimmen. Bei der ersten Kamera handelt es sich dementsprechend um eine sogenannte Zeilenkamera, die für eine linienförmige Abtastung der Oberfläche des zylindrischen Gegenstands mit einer hohen Abtastfrequenz ausgebildet ist. Die Abtastfrequenz bezeichnet diejenige Frequenz, mit der die aneinander gereihten lichtempfindlichen Zellen wiederholt ausgelesen werden, um die elektrischen Signalpegel dieser einzelnen Zellen an die Verarbeitungseinrichtung weiterzuleiten. In der Verarbeitungseinrichtung wird aus diesen Signalpegeln eine Bildzeile erzeugt, die mit bereits gespeicherten vorhergehenden und nachfolgend ermittelten Bildzeilen zu einem Gesamtbild der Oberfläche des zylindrischen Gegenstands zusammengesetzt wird. Vorzugweise ist vorgesehen, dass die lichtempfindlichen Zellen der ersten Kamera in genau einer Zeile angeordnet sind, wodurch zum einen ein einfacher Aufbau der ersten Kamera und zum anderen ein hohes Qualitätsniveau für das von der ersten Kamera zur Verfügung gestellte Bild gewährleistet werden kann, da es nicht durch benachbarte Zeilen zu unerwünschten Interaktionen zwischen lichtempfindlichen Zellen kommt.

Bei einer vorteilhaften Weiterbildung der Erfindung ist vorgesehen, dass der erste Abtastausschnitt längs der Hauptachse der ersten Abtastgeometrie wenigstens 1.000, vorzugsweise wenigstens 2.000, besonders bevorzugt wenigstens 4.000, insbesondere wenigstens 8.000 lichtempfindliche Zellen aufweist. Mit einer derartigen Anzahl von lichtempfindlichen Zellen, die längs der Hauptachse angeordnet sind, lässt sich bei Verwendung eines entsprechenden optischen Systems eine hohe Bildqualität für die abgetastete Zeile erzielen. Je nach Anzahl der lichtempfindlichen Zellen längs der Hauptachse kann eine optische Auflösung für die erste Kamera realisiert werden, die im Bereich oder gegebenenfalls sogar oberhalb einer maximalen Auflösung für das verwendete Bearbeitungsverfahren, insbesondere Druckverfahren, liegt, das zur Bearbeitung der Oberfläche des zylindrischen Gegenstands eingesetzt wird. Für diesen Fall kann auch mit Hilfe der ersten Kamera eine Qualitätsaussage über das an der Oberfläche des zylindrischen Gegenstands durchgeführte Bearbeitungsverfahren erfolgen. Ist die Auflösung der ersten Kamera geringer als die Auflösung des jeweiligen Bearbeitungsverfahrens, insbesondere Druckverfahrens, gewählt, so wird die erste Kamera für ihre Hauptaufgabe, nämlich die Kontrolle einer vollständigen Bearbeitung der Oberfläche des zylindrischen Gegenstands und für eine Kontrolle von Eigenschaften und Strukturen auf der Oberfläche des zylindrischen Gegenstands, die aufgrund der Auflösung der ersten Kamera zuverlässig detektiert werden können, eingesetzt.

In weiterer Ausgestaltung der Erfindung ist vorgesehen, dass der zweite Abtastausschnitt als Matrix von lichtempfindlichen Zellen ausgebildet ist, wobei die lichtempfindlichen Zellen in der Matrix in wenigstens zwei Spalten und wenigstens zwei senkrecht zu den Spalten ausgerichteten Zeilen angeordnet sind. Mit Hilfe der auch als Matrixkamera bezeichneten zweiten Kamera kann daher ein flächiger Abtastausschnitt ohne eine Relativbewegung zwischen zweiter Kamera und zylindrischem Gegenstand abgetastet werden. Bevorzugt sind die lichtempfindlichen Zellen hinsichtlich ihrer Größe und Beabstandung in den Spalten und Zeilen derart auf das zugeordnete optische System angepasst, dass eine Abtastung der Oberfläche des zylindrischen Gegenstands mit einer Auflösung erfolgt, die größer als die Auflösung des entsprechenden Bearbeitungsverfahrens, insbesondere Druckverfahrens, ist. Dadurch ist sichergestellt, dass Fehler bei der Bearbeitung der Oberfläche des zylindrischen Gegenstands durch die zweite Kamera zumindest im Bereich des zweiten Abtastausschnitts erkannt werden können. Dies ist insbesondere dann von Bedeutung, wenn bei der Durchführung des Bearbeitungsverfahrens systematische Fehler wie beispielsweise ein Farbversatz von unterschiedlichen Farben beim Mehrfarbdruck, auftreten können und davon auszugehen ist, dass sich derartige systematische Fehler zumindest im Wesentlichen in gleicher Weise über die gesamte Oberfläche des zylindrischen Gegenstands erstrecken. Solche systematischen Fehler sollen stichprobenartig durch die Detektion an einer Referenzposition mit Hilfe der zweiten Kamera aufgedeckt werden.

Bei einer vorteilhaften Weiterbildung der Erfindung ist vorgesehen, dass für die zweite Kamera ein Verhältnis einer Anzahl von lichtempfindlichen Zellen in den Spalten und einer Anzahl von lichtempfindlichen Zellen in den Zeilen zwischen eins und zehn vorgesehen ist. Beispielsweise kann der Bildaufnehmer der zweiten Kamera rechteckig, insbesondere quadratisch, ausgebildet sein, wobei die Anzahl von lichtempfindlichen Zellen in den Spalten und die Anzahl von lichtempfindlichen Zellen in den Zeilen exemplarisch jeweils identisch ist. Für diesen Fall beträgt ein Wert für das Verhältnis der Anzahl von lichtempfindlichen Zellen in den Spalten und der Anzahl von lichtempfindlichen Zellen in den Zeilen 1.

In weiterer Ausgestaltung der Erfindung ist vorgesehen, dass den Kameras eine Beleuchtungseinrichtung zugeordnet ist, die für eine wahlweise Beleuchtung des zylindrischen Gegenstands längs einer ersten Beleuchtungshauptachse oder längs einer zweiten Beleuchtungshauptachse ausgebildet ist, wobei die erste und die zweite Beleuchtungshauptachse einen Winkel zueinander einnehmen. Um eine Inspektion der zylindrischen Gegenstände zumindest weitgehend unabhängig von äußeren Umgebungsbedingungen zu ermöglichen, ist eine Beleuchtungseinrichtung vorgesehen. Die Beleuchtungseinrichtung ist derart auf die Kameras und den zylindrischen Gegenstand, der mit Hilfe der Inspektionseinrichtung überprüft werden soll, abgestimmt, dass eine vorteilhafte Ausleuchtung der Oberfläche des zylindrischen Gegenstands gewährleistet ist. Vorzugsweise umfasst die Beleuchtungseinrichtung mehrere Leuchtmittel wie Gasentladungsröhren, Glühbirnen oder Leuchtdioden, insbesondere weiße Leuchtdioden. Erfindungsgemäß ist vorgesehen, dass die Beleuchtungseinrichtung für eine Beleuchtung des zylindrischen Gegenstands unter unterschiedlichen Beleuchtungswinkeln ausgebildet ist, um je nach gewähltem Beleuchtungswinkel unterschiedliche Aussagen über die Beschaffenheit der zu inspizierenden Oberfläche des zylindrischen Gegenstands treffen zu können. Erfindungsgemäß ist die Beleuchtungseinrichtung derart ausgebildet, dass eine Beleuchtungshauptachse, also eine von den Lichtstrahlen, die von dem oder den Leuchtmitteln ausgehen, bestimmte Hauptlichtberichtung je nach durchzuführender Inspektion verändert werden kann. Beispielsweise ist bei einer optischen Abtastung der Oberfläche des zylindrischen Gegenstands zur Überprüfung der Qualität eines Druckbilds die Nutzung des Auflichtverfahrens vorteilhaft, bei dem die Beleuchtungshauptachse zumindest im Wesentlichen normal zur Oberfläche des zylindrischen Gegenstands ausgerichtet ist. Demgegenüber kann eine Überprüfung einer Decklackschicht, also einer transparenten Lackierung des zylindrischen Gegenstands, in vorteilhafter Weise durch Überprüfung von Lichtreflexionen an der Oberfläche des zylindrischen Gegenstands inspiziert werden. Somit ist vorteilhaft, wenn die Beleuchtungshauptachse und die optische Achse der entsprechenden Kamera zu diesem Zweck in einem Winkel zur Oberfläche des zylindrischen Gegenstands ausgerichtet sind, der dem Reflektionswinkel der entsprechenden Beschichtung entspricht. Um die Beleuchtung des zylindrischen Gegenstands mit den unterschiedlichen Ausrichtungen der Beleuchtungshauptachsen zu ermöglichen, kann beispielsweise vorgesehen sein, dass die Beleuchtungseinrichtung wenigstens zwei Gruppen von unterschiedlich ausgerichteten Leuchtmitteln umfasst, die wahlweise aktiviert und deaktiviert werden. Alternativ kann vorgesehen sein, dass die Beleuchtungseinrichtung lediglich eine Gruppe von Leuchtmitteln umfasst und relativ zu den Kameras und zum zylindrischen Gegenstand bewegbar, insbesondere schwenkbar, gelagert ist. In diesem Fall kann mit Hilfe eines geeigneten Stellantriebs eine Veränderung der Ausrichtung der Beleuchtungshauptachse der Beleuchtungseinrichtung erzielt werden. Vorteilhaft ist es, wenn die erste Beleuchtungshauptachse im Wesentlichen normal auf die Oberfläche des zylindrischen Gegenstands ausgerichtet ist, während die zweite Beleuchtungshauptachse mit einer optischen Achse einer der Kameras einen Winkel einschließt, der einem Reflektionswinkel einer zu überprüfenden Lackierung entspricht.

Bevorzugt ist vorgesehen, dass die Kameras an einem Grundkörper festgelegt sind und dass am Grundkörper wenigstens ein Stellmittel für eine fernsteuerbare, insbesondere elektrisch einstellbare, Positionsänderung für wenigstens eine Kamera relativ zum Grundkörper ausgebildet ist. Durch die Positionsänderung für wenigstens eine der Kameras relativ zum Grundkörper kann eine Anpassung der Positionierung der jeweiligen Kameras oder auch beider Kameras relativ zum zylindrischen Gegenstand durchgeführt werden. Hiermit kann sichergestellt werden, dass bei unterschiedlich großen zylindrischen Gegenständen stets ein für die optische Inspektion der Oberfläche des zylindrischen Gegenstands günstiger Abstand zwischen der jeweiligen Kamera und dem zylindrischen Gegenstand eingehalten wird. Vorteilhaft ist es, wenn das Stellmittel zur Veränderung der Position der jeweiligen Kamera elektrisch einstellbar ist, so dass eine automatisierte Anpassung der Kameraposition bei einem Wechsel des zylindrischen Gegenstands durchgeführt werden kann.

Vorteilhaft ist es, wenn die Beleuchtungseinrichtung ortsfest am Grundkörper angeordnet ist und wenigstens zwei, jeweils separat ansteuerbare Gruppen von Leuchtmitteln umfasst, die unterschiedlich ausgerichtet sind und die die erste und die zweite Beleuchtungshauptachse bestimmen. Hierdurch kann eine einfache Umschaltung zwischen den unterschiedlichen Gruppen von Leuchtmitteln vorgenommen werden, um unterschiedliche Inspektionsabläufe für den zylindrischen Gegenstand durchzuführen, ohne hierbei eine länger andauernde Positionsänderung für die Beleuchtungseinrichtung abwarten zu müssen. Vorteilhaft können mehr als zwei separat ansteuerbare Gruppen von Leuchtmitteln vorgesehen werden, so dass gegebenenfalls durch einen gleichzeitigen Betrieb von wenigstens zwei Gruppen von Leuchtmitteln eine variable Ausrichtung der Beleuchtungshauptachse ermöglicht wird.

Die Aufgabe der Erfindung wird gemäß einem zweiten Aspekt durch ein Verfahren zur optischen Inspektion einer Oberfläche gemäß dem Anspruch 11 gelöst. Hierbei sind die folgenden Schritte vorgesehen: Erfassen eines am zylindrischen Gegenstand ausgebildeten Referenzbereichs bei ruhendem zylindrischen Gegenstand mit einer Kamera, die einen Abtastausschnitt mit einer flächigen Abtastgeometrie aufweist und Erfassen einer Oberfläche des zylindrischen Gegenstands bei rotierendem zylindrischen Gegenstand mit einer Kamera, die einen Abtastausschnitt mit einer linienförmigen Abtastgeometrie aufweist, wobei eine Rotationsgeschwindigkeit des Gegenstands und eine Abtastrate der ersten Kamera derart aufeinander angepasst sind, dass eine vollständige Erfassung der Oberfläche des Gegenstands gewährleistet ist, wobei eine Abtastrate der ersten Kamera von der Steuereinrichtung derart an eine Winkelgeschwindigkeit des zylindrischen Gegenstands angepasst wird, dass von der ersten Kamera abgetastete, aufeinanderfolgende linienförmige Abtastausschnitte zu einem vollständigen Gesamtbild von der Oberfläche des zylindrischen Gegenstands verarbeitet werden.

Erfindungsgemäß ist also vorgesehen, dass eine Rotationsgeschwindigkeit des an einer geeigneten, drehbar gelagerten und mittels eines Elektromotor mit variabler Drehzahl angetriebenen Werkstückaufnahme durch Verwendung geeigneter Sensorik, insbesondere eines Drehzahlmessers, und/oder durch Auswertung von Ansteuersignalen für den Elektromotor erfasst wird und an die Verarbeitungseinrichtung bereitgestellt wird. Die Verarbeitungseinrichtung synchronisiert in Kenntnis der Ausmaße des linienförmigen Abtastausschnitts die Abtastrate der Kamera mit der linienförmigen Abtastgeometrie mit der Drehzahl des zylindrischen Gegenstands, dass eine vollständige, insbesondere lückenlose und vorzugsweise überlappungsfreie Abtastung der Oberfläche des zylindrischen Gegenstands gewährleistet ist. Diese Vorgehensweise ist vorteilhaft, da der zylindrische Gegenstand nach der Abtastung durch die Kamera mit der flächigen Abtastgeometrie zunächst aus dem Stillstand beschleunigt werden muss und nach dem erfindungsgemäßen Verfahren bereits während dieser Beschleunigungsphase die geforderte vollständige Abtastung der Oberfläche vorgenommen werden kann.

Bei einer Weiterbildung des Verfahrens ist vorgesehen, dass in Abhängigkeit von einem Abtastergebnis, das mit wenigstens einer Kamera bei der Abtastung der Oberfläche des zylindrischen Gegenstands ermittelt wurde, eine Ansteuerung eines Tintenstrahldruckkopfs zur Kompensation von Druckfehlern vorgenommen wird. Somit kann bei einem Auftreten von Fehlern in einem Druckbild, das von einem Tintenstrahldruckkopf erzeugt wird, der nächste zu bearbeitende Gegenstand in einer Weise bedruckt werden, bei der eventuelle Teilausfälle des Drucckopfs durch eine geeignete Ansteuerung der verbliebenen funktionsfähigen Druckdüsen kompensiert werden können.

Ferner wird die Aufgabe der Erfindung gemäß einem dritten Aspekt durch eine digitale Tintenstrahldruckeinrichtung für eine Bedruckung einer Oberfläche eines zylindrischen Gegenstands mit einem Dekor gelöst. Hierbei ist vorgesehen, dass ein drehbar gelagerter Werkstückrundtisch an einem Maschinengestell aufgenommen ist, an dem ferner mehrere ortsfeste Arbeitsstationen angebracht sind, wobei der Werkstückrundtisch mehrere drehbar gelagerte und individuell angetriebene Werkstückaufnahmen zur Aufnahme von hülsenförmigen Werkstücken aufweist, wobei eine erste Arbeitsstation als Druckeinheit ausgebildet ist, die einen Tintenstrahldruckkopf umfasst, der zur Abgabe von Tintentropfen auf eine Oberfläche des zylindrischen Gegenstands ausgebildet ist und wobei eine zweite Arbeitsstation als Inspektionseinrichtung nach einem der Ansprüche 1 bis 10 ausgebildet ist.

Mit einer derartigen Tintenstrahldruckeinrichtung können in einfacher Weise variable Bedruckungen auf die zylindrischen Gegenstände aufgebracht werden, indem eine entsprechende Ansteuerung des Tintenstrahldruckkopfs in Abhängigkeit von dem jeweils aktuellen Dekor für den zylindrischen Gegenstand vorgenommen wird. Um eine Überprüfung der Qualität des im Tintenstrahldruckvorgang erzeugten Dekors zu ermöglichen, ist die Inspektionseinrichtung vorgesehen, mit deren Hilfe geprüft werden kann, ob die zu bedruckende Oberfläche des zylindrischen Gegenstands auch vollständig bedruckt wurde und ob die Tintentropfen in der vorgegebenen Anordnung angeordnet wurden, so dass das erzeugte Druckbild auch den vorgegebenen Qualitätsanforderungen entspricht.

Bei einer vorteilhaften Weiterbildung der Tintenstrahldruckeinrichtung ist vorgesehen, dass eine Ansteuereinheit für den Tintenstrahldruckkopf und die Verarbeitungseinrichtung für die Signale der Kameras der Inspektionseinrichtung derart elektrisch verbunden und aneinander angepasst sind, dass bei einer Detektion von Druckfehlern auf der Oberfläche des zylindrischen Gegenstands durch die Inspektionseinrichtung eine Veränderung einer Tintenabgabe durch den Tintenstrahldrucckopf erfolgt, um eine zumindest teilweise Kompensation der detektierten Druckfehler bei einem nachfolgenden Bedruckungsvorgang zu gewährleisten. Beispielsweise kann vorgesehen werden, dass bei einem Auftreten von Druckfehlern bei einem nachfolgenden Druckvorgang eine Tintenabgabe durch den Tintenstrahldruckkopf dahingehend verändert wird, dass einzelne Düsen größere Tintenmengen abgeben, um beispielsweise ausgefallene benachbarte Düsen zumindest teilweise zu ersetzen. Ergänzend oder alternativ kann vorgesehen sein, den Tintenstrahldruckkopf während des Druckvorgangs bei rotierendem zylindrischen Gegenstand längs der Rotationsachse zu verschieben, um ebenfalls ausgefallene Tintendüsen dadurch zu ersetzen, dass andere Tintendüsen an die jeweilige Druckposition entsprechende Tintentropfen abgeben.

In weiterer Ausgestaltung der Tintenstrahldruckeinrichtung ist vorgesehen, dass der Tintenstrahldruckkopf und/oder die Kameras der Inspektionseinrichtung beweglich am Maschinengestell gelagert sind, um eine Anpassung an unterschiedliche Größen des zylindrischen Gegenstands zu ermöglichen.

Vorteilhafte Ausführungen der Erfindung sind in der Zeichnung dargestellt. Hierbei zeigt:
- Figur 1: eine schematische Draufsicht auf eine digitale Tintenstrahldruckeinrichtung mit einem drehbeweglich gelagerten Werkstückrundtisch und mehreren Arbeitsstationen zur Bedruckung und Inspektion von zylindrischen Gegenständen,
- Figur 2: eine Vorderansicht einer als Inspektionseinrichtung ausgebildeten Arbeitsstation der digitalen Tintenstrahldruckeinrichtung gemäß der Figur 1,
- Figur 3: eine schematische Draufsicht auf die Inspektionseinrichtung gemäß der Figur 2,
- Figur 4: eine schematische Darstellung einer Zeile von aneinandergereihten lichtempfindlichen Zellen einer ersten Kamera der Inspektionseinrichtung,
- Figur 5: eine Matrix von lichtempfindlichen Zellen einer zweiten Kamera der Inspektionseinrichtung,
- Figur 6: eine schematische Vorderansicht einer als Bedruckungsstation ausgebildeten Arbeitsstation der digitalen Tintenstrahldruckeinrichtung,
- Figur 7: eine schematische Draufsicht auf die Bedruckungsstation gemäß der Figur 6,
- Figur 8: eine schematische Darstellung einer Düsenanordnung eines Tintenstrahldruckkopfs,
- Figur 9: die Düsenanordnung des Tintenstrahldruckkopfs gemäß der Figur 8 mit defekten Tintendüsen und
- Figur 10: eine schematische Darstellung eines zylindrischen Gegenstands mit bedruckter Oberfläche und einem Referenzbereich.

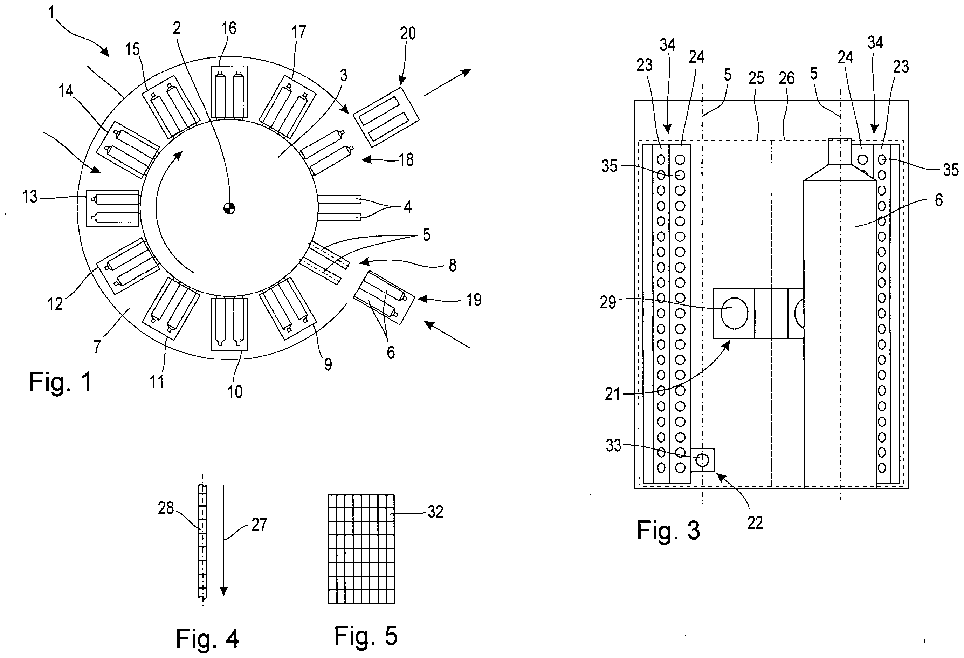

Eine in der Figur 1 dargestellte Tintenstrahldruckeinrichtung 1 umfasst einen drehbar um eine Drehachse 2 gelagerten Werkstückrundtisch 3 und mehrere, exemplarisch jeweils paarweise am Werkstückrundtisch angebrachte Werkstückaufnahmen 4. Die Werkstückaufnahmen 4 sind mit nicht dargestellten Antriebsmitteln um Rotationsachsen 5 individuell drehbar gelagert und zur Aufnahme von hülsenförmigen, insbesondere als Aerosoldosenrohlinge oder Tubenrohlinge ausgebildeten, zumindest im Wesentlichen zylindrischen Gegenständen 6 vorgesehen. In einem von den Werkstückaufnahmen 4 bei einer Drehbewegung des Werkstückrundtischs 3 um die Drehachse 2 überstrichenen ringförmigen Bereich 7, der sich in radialer Richtung um den Werkstückrundtisch 3 erstreckt, sind mehrere Arbeitsstationen 8 bis 18 angeordnet, die zu einer Bearbeitung und/oder Prüfung der transportierten Gegenstände 6 ausgebildet sind.

Die Arbeitsstation 8 ist eine Beladestation, an der die zylindrischen Gegenstände 6 exemplarisch paarweise auf die Werkstückaufnahmen 4 durch eine geeignete Transporteinrichtung 19, die mit einem nicht näher dargestellten Fördersystem für die zylindrischen Gegenstände 6 gekoppelt ist, aufgeschoben werden.

Exemplarisch wird an der Arbeitsstation 9 durch eine erste optische Abtastung der zylindrischen Gegenstände 6 eine rotatorische Position der zylindrischen Gegenstände 6 bestimmt, beispielsweise um eine korrekte rotatorische Ausrichtung der zylindrischen Gegenstände 6 für einen an der Arbeitsstation 10 erfolgenden Druckvorgang zu gewährleisten. Dies ist insbesondere dann von Bedeutung, wenn die zu bedruckende Oberfläche der Gegenstände mit Merkmalen versehen ist, die mit dem aufzubringenden Druckbild in vorgegebener Weise in Passung stehen sollen. Bei diesen Merkmalen kann es sich beispielsweise um lokale Ein- und/oder Ausprägungen (Embossing) in und/oder aus der Oberfläche des Gegenstands 6 und/oder um vorbedruckte Bereiche handeln, die ihrerseits als Grundierung für die nachfolgende Bedruckung dienen sollen.

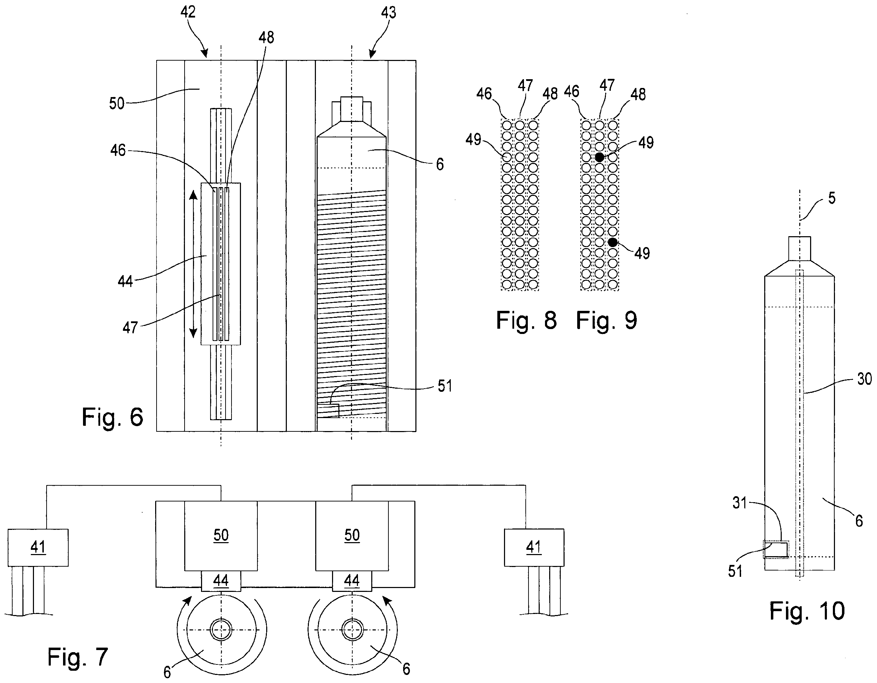

Die Arbeitsstation 10 ist exemplarisch als Tintenstrahldruckstation ausgebildet, an der die zylindrischen Gegenstände 6 während einer Rotationsbewegung um jeweilige Rotationsachsen 5 unter Verwendung eines in der Figur 6 näher dargestellten Tintenstrahldruckkopfs in einem vorgegebenen Bereich bedruckt werden.

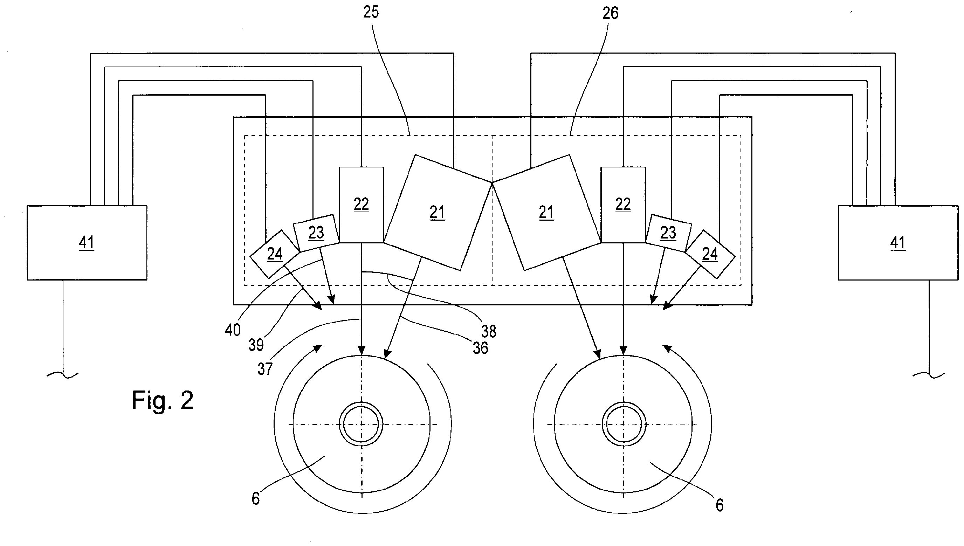

Die Arbeitsstation 14 ist als Inspektionseinrichtung ausgebildet und in den Figuren 2 und 3 näher dargestellt.

Die weiteren Arbeitsstationen 11 bis 13 und 15 bis 17 dienen zur weiteren Bearbeitung der zylindrischen Gegenstände 6, beispielsweise zur Aushärtung des Druckbilds oder zur Aufbringung eines Schutzlacks auf die Bedruckung.

An der Arbeitsstation 18 findet ein Entladevorgang statt, bei dem die zylindrischen Gegenstände 6 mit Hilfe einer Transporteinrichtung 20 von den dornartig ausgebildeten Werkstückaufnahmen 4 abgezogen werden und einem nicht näher dargestellten weiterführenden Transportsystem zugeführt werden.

Der Werkstückrundtisch 4 führt zur schrittweisen Bearbeitung der zylindrischen Gegenständen 6 an den jeweiligen Arbeitsstationen 8 bis 18 eine Drehschrittbewegung aus, bei der die jeweils paarweise angeordneten Werkstückaufnahmen 4 aus einer der jeweiligen Arbeitsstation 8 bis 18 gegenüberliegenden Position in eine der jeweils nachfolgenden Arbeitsstation 8 bis 18 gegenüberliegenden Position transportiert werden, wobei die Drehschrittbewegung als Abfolge einer Beschleunigung aus dem Stillstand, einer Abbremsung aus der erreichten Zielgeschwindigkeit und einer nachfolgenden Stillstandszeit erfolgt. Vorzugsweise ist ein nicht näher dargestellter Antrieb für den Werkstückrundtisch 3 derart ausgebildet, dass die Beschleunigung und Abbremsung des Werkstückrundtischs 3 in weiten Bereichen und die Stillstandszeit völlig frei einstellbar sind und an die Erfordernisse der Bearbeitung der jeweiligen zylindrischen Gegenstände 6 an den Arbeitsstationen 8 bis 18 angepasst werden können.

Die in den Figuren 2 und 3 dargestellte Inspektionseinrichtung 14, die exemplarisch als Arbeitsstation 14 der Tintenstrahldruckeinrichtung 1 gemäß der Figur 1 angeordnet ist, umfasst exemplarisch eine spiegelbildliche Anordnung von zwei Inspektionssystemen 25, 26, die jeweils eine erste Kamera 21, eine zweite Kamera 22, ein erstes Beleuchtungselement 23 sowie ein zweites Beleuchtungselement 24 umfassen. Aus Gründen der Übersichtlichkeit ist in der Darstellung der Figur 2 lediglich dem Inspektionssystem 26 ein zylindrischer Gegenstand 6 zugeordnet. In der Figur 3 sind beiden Inspektionssystemen 25, 26 jeweils zylindrische Gegenstände 6 zugeordnet, die zeitgleich und unabhängig voneinander von den jeweiligen Inspektionssystemen 25 und 26 abgetastet werden können.

Exemplarisch ist die erste Kamera 21 als Zeilenkamera ausgebildet und umfasst einen nicht näher dargestellten Bildaufnehmer, bei dem lichtempfindliche Zellen längs einer Hauptachse 27 aneinandergereiht angeordnet sind. Eine derartige Aneinanderreihung von lichtempfindlichen Zellen 28 ist in der Figur 4 dargestellt. Exemplarisch ist der nicht dargestellte Bildaufnehmer der ersten Kamera 21 mit genau einer Zeile von lichtempfindlichen Zellen 28 ausgestattet, so dass sich in Kombination mit einem nicht näher dargestellten optischen System 29 der ersten Kamera 21, das aus einer oder mehreren Linsen bestehen kann, eine linienartige erste Abtastgeometrie 30 für die Abtastung der Oberfläche des zylindrischen Gegenstands 6 ergibt, wie dies in der Figur 10 durch das gestrichelte Rechteck symbolisch dargestellt wird.

Bei der zweiten Kamera 22 handelt es sich um eine Kamera, die eine flächige Abtastgeometrie, beispielweise eine in der Figur 10 symbolisierte, rechteckige zweite Abtastgeometrie 31 aufweist, um einen definierten Oberflächenbereich des zylindrischen Gegenstands in einer einzigen Aufnahme bei ruhendem Gegenstand 6 abtasten zu können. Die zweite Kamera 22 weist dementsprechend einen nicht näher dargestellten Bildaufnehmer auf, bei dem lichtempfindliche Zellen 32 in einer Matrix aus Zeilen und Spalten angeordnet sind, wie dies ausschnittartig in der Figur 5 schematisch dargestellt ist. Rein zum Zweck der Erläuterung sind die lichtempfindlichen Zellen 32 der zweiten Kamera 22 gemäß der Figur 5 in acht vertikalen Spalten und acht horizontalen Zeilen angeordnet, so dass sich ein Verhältnis der Anzahl von lichtempfindlichen Zellen 32, exemplarisch 8, in einer Spalte und einer Anzahl von lichtempfindlichen Zellen 32 in einer Zeile, ebenfalls exemplarisch 8, von 1 ergibt. Praktische Ausführungsformen derartiger Bildaufnehmer weisen typischerweise mehrere hundert Zeilen und Spalten von lichtempfindlichen Zellen auf, wobei ein Verhältnis der Anzahl von lichtempfindlichen Zellen in den Zeilen und in den Spalten in einen Bereich von 1 bis 10 liegt. Die zweite Kamera 22 weist ebenfalls ein optisches System 33 auf, das die Ausdehnung der zweiten Abtastgeometrie 31 bestimmt.

Ferner ist den Inspektionssystemen 25, 26 jeweils eine Beleuchtungseinrichtung 34 zugeordnet, die exemplarisch das erste Beleuchtungselement 23 und das zweite Beleuchtungselement 24 umfasst. Beispielhaft sind beide Beleuchtungselemente 23, 24 als Reihenanordnung von Leuchtdioden 35 ausgebildet, wobei die Beleuchtungselemente 23 und 24 separat oder gleichzeitig betrieben werden können.

Wie aus der Figur 3 zu entnehmen ist, können die nicht sichtbaren Werkstückaufnahmen mit den daran aufgenommenen zylindrischen Gegenständen 6 um die in der Figur 2 erkennbaren Rotationsachsen 5 rotiert werden, so dass der gesamte Umfang des jeweiligen zylindrischen Gegenstands 6 die Inspektionssysteme 25 bzw. 26 passiert. Vorteilhaft ist es, wenn sämtliche Informationen zur Bewertung der Qualität der Oberfläche des zylindrischen Gegenstands 6 in einer einzigen Umdrehung des jeweiligen zylindrischen Gegenstands 6 ermittelt werden können. Exemplarisch ist vorgesehen, dass eine optische Achse 36 der ersten Kamera 21, deren Ausrichtung durch das optische System 29 und den nicht dargestellten Bildaufnehmer der ersten Kamera 21 bestimmt wird, in Richtung der Rotationsachse 5 des auf der Werkstückaufnahme aufgenommenen zylindrischen Gegenstands 6 weist und diese schneidet. Ferner ist ebenfalls beispielhaft vorgesehen, dass eine optische Achse 37 der zweiten Kamera 22, deren Ausrichtung durch das optische System 33 der zweiten Kamera 22 und den nicht dargestellten Bildaufnehmer der zweiten Kamera 22 bestimmt wird, ebenfalls in Richtung der Rotationsachse 5 weist und diese schneidet. Wie aus der Figur 2 hervorgeht, sind die Kameras 21 und 22 längs der Rotationsachse 5 beabstandet voneinander angeordnet, so dass die beiden optischen Achsen 36 und 37 lediglich in einer Projektionsebene, wie sie exemplarisch in der Figur 3 dargestellt ist, einen spitzen Winkel 38 einnehmen.

Bei den Beleuchtungselementen 23 und 24, die exemplarisch mit Leuchtdioden 35 ausgestattet sind, werden die Beleuchtungshauptachsen 39 und 40 durch die Ausrichtung der nicht näher dargestellten Halbleiterelemente und des üblicherweise vorgesehenen Linsensystems bestimmt und sollen beispielhaft jeweils normal zu den Außenoberflächen der Beleuchtungselemente 23 und 24 ausgerichtet sein.

Exemplarisch ist das erste Beleuchtungselement 23 mit seiner Beleuchtungshauptachse 39 derart gegenüber der in Figur 3 nicht sichtbaren Werkstückaufnahme und dem darauf aufgenommenen zylindrischen Gegenstand 6 ausgerichtet, dass eine Inspektion der Oberfläche des zylindrischen Gegenstands 6 in Zusammenarbeit mit der ersten Kamera 21 im Reflexionsverfahren stattfinden kann. Durch die Anwendung des Reflexionsverfahrens kann beispielsweise eine transparente Beschichtung wie ein Decklack auf der Oberfläche des zylindrischen Gegenstands 6 überprüft werden.

Demgegenüber ist die Beleuchtungshauptachse 40 des zweiten Beleuchtungselements 24 derart gegenüber der nicht sichtbaren Werkstückaufnahme und dem darauf aufgenommenen zylindrischen Gegenstand 6 ausgerichtet, dass eine Inspektion der Oberfläche des zylindrischen Gegenstands 6 sowohl mit der ersten Kamera 21 als auch mit der zweiten Kamera 22 im Auflichtverfahren ermöglicht wird, wodurch beispielsweise die Qualität einer Bedruckung geprüft werden kann.

Exemplarisch ist vorgesehen, dass die beiden Kameras 21 und 22 sowie die Beleuchtungselemente 23 und 24 mit einer Steuereinrichtung 41 verbunden sind, die zum einen für eine Ansteuerung der Beleuchtungselemente 23 und 24 und zum anderen für einen Empfang von Signalen der ersten Kamera 21 und der zweiten Kamera 22 ausgebildet ist. Die Steuereinrichtung enthält zur Verarbeitung der Abtastsignale der ersten Kamera 21 und der zweiten Kamera 22 eine nicht näher dargestellte Verarbeitungseinrichtung, in der ein Auswerteprogramm gespeichert ist, das zur Auswertung der von den beiden Kameras 21 und 22 bereitgestellten Abtastsignale vorgesehen ist.

Die in den Figuren 6 und 7 dargestellte Arbeitsstation 10, die als Druckstation ausgebildet ist, umfasst zwei spiegelbildlich zueinander angeordnete Drucksysteme 42, 43. Aus Gründen der Übersichtlichkeit ist in der Figur 6 lediglich einer von zwei mit der Druckstation 10 bedruckbaren zylindrischen Gegenstände 6 dargestellt, demgegenüber sind in der Figur 7 beide gegenüberliegend zur Druckstation 10 angeordnete und drehbar gelagerte zylindrischen Gegenstände 6 dargestellt. Jedes Drucksystem 42, 43 umfasst exemplarisch einen Tintenstrahldruckkopf 44, der eine leistenartige Gestalt aufweist und an dessen dem zylindrischen Gegenstand 6 zugewandter Stirnseite 45 exemplarisch drei Düsenreihen 47, 48 und 49 ausgebildet sind. Jede der Düsenreihen 46, 47 und 48 umfasst mehrere, vorzugsweise in gleicher Teilung oder Beabstandung angeordnete Düsen 49, wie sie exemplarisch in den Figuren 8 und 9 dargestellt sind. Jede der Düsen 49 in den jeweiligen Düsenreihen 46, 47 und 48 ist beispielhaft einzeln ansteuerbar und zur Abgabe von Tintentropfen ausgebildet.

Bei dem Ausführungsbeispiel gemäß den Figuren 6 bis 9 ist vorgesehen, dass die erste Düsenreihe 46 zur Abgabe einer ersten Farbe, insbesondere der Farbe Cyan, die zweite Düsenreihe 47 zur Abgabe einer zweiten Farbe, insbesondere der Farbe Magenta und die dritte Düsenreihe zur Abgabe einer dritten Farben, insbesondere der Farbe Gelb (Yellow) ausgebildet ist. Dementsprechend kann ein nicht näher dargestelltes Druckbild durch Kombination von unterschiedlich eingefärbten Tintentropfen erzeugt werden. Um eine hohe Auflösung für das zu erzeugende Druckbild zu erreichen, die größer als eine Teilung der Düsen 49 längs der Düsenreihen 46, 47 und 48 ist, kann der Tintenstrahldruckkopf 44 mit einer nur schematisch dargestellten Linearantriebseinrichtung 50 parallel zur Rotationsachse 5 der in den Figuren 6 und 7 nicht sichtbaren Werkstückaufnahme verfahren werden. Hierdurch kann beispielsweise eine spiralförmige Bedruckung des zylindrischen Gegenstands 6 vorgesehen werden, wie die durch die schräge Linierung in der Figur 6 angedeutet ist.

In dem vom Tintenstrahldruckkopf 44 erzeugten Druckbild auf dem zylindrischen Gegenstand 6 kann in einem vorgebbaren Flächenabschnitt ein Referenzbereich 51 gedruckt werden, der entweder Teil der übrigen Bedruckung für den zylindrischen Gegenstand 6 ist oder der einen separaten Druckbereich bestimmt. Dieser Referenzbereich 51 ist für eine optische Abtastung durch die zweite Kamera 22 während des Inspektionsvorgangs vorgesehen und ermöglicht beispielsweise die Ermittlung der Positionierung einzelner Tintentropfen, die vom Tintenstrahldruckkopf 44 während des Bedruckvorgangs ausgegeben werden.

Exemplarisch sind die Drucksysteme 42 und 43 mit der Steuereinrichtung 41 verbunden, so dass beispielsweise als Reaktion auf die Detektion von Druckfehlern im erzeugten Druckbild durch die Inspektionssysteme 25 oder 26 eine Kompensation dieser Druckfehler beim nächsten zu bedruckenden Gegenstand vorgenommen werden kann. In der Figur 9 ist exemplarisch der Fall dargestellt, dass in der zweiten Düsenreihe 47 und in der dritten Düsenreihe 48 jeweils eine Düse verstopft ist, was durch die ausgefüllte Darstellung der jeweiligen Düsen 49 symbolisiert wird. Um dennoch ein korrektes Druckbild erzeugen zu können, kann wahlweise vorgesehen werden, durch benachbarte Düsen 49 jeweils größere Tintentropfen auszugeben oder durch ein geeignetes Verfahren des Tintenstrahldrucckopfs 44 längs der Rotationsachse 5 stets eine funktionsfähige Düse auch an denjenigen Orten bereitzustellen, an denen eigentlich die jeweils verstopfte Düse 49 einen Tintenpunkt abgeben sollte.

Aus der Darstellung der Figur 10 geht die linienartige Abtastgeometrie 30 der ersten Kamera 21 hervor. Mit dieser linienförmigen Abtastgeometrie 30 kann jeweils nur ein schmaler, linienförmiger Bereich der Oberfläche des zylindrischen Gegenstands 6 abgetastet werden. Allerdings wird durch die Rotation des zylindrischen Gegenstands 6 um die Rotationsachse 5 eine vollständige Abtastung der Oberfläche des zylindrischen Gegenstands 6 ermöglicht, wobei die linienförmigen Bilder der ersten Kamera 21 in der Steuereinrichtung 41 zu einem Umfangsbild für den zylindrischen Gegenstand 6 zusammengesetzt werden und anschließend durch entsprechende Algorithmen auf Vollständigkeit und Einhaltung einer vorgebbaren Mindestqualität untersucht werden können.

Die zweite Abtastgeometrie 31 der zweiten Kamera 22 ist geringfügig größer als der Referenzbereich 51 am zylindrischen Gegenstand 6 gewählt, so dass dieser vollständig erfasst werden kann und ebenfalls in der Steuereinrichtung 41 durch Anwendung geeigneter Berechnungsverfahren und Algorithmen auf unerwünschte Abweichungen untersucht werden kann. Sowohl bei Vorliegen von Abweichungen im Referenzbereich 51 als auch bei Vorliegen von Abweichungen an der gesamten Oberfläche des zylindrischen Gegenstands 6, die mit Hilfe der ersten Kamera 21 ermittelt werden, ist die Steuereinrichtung 41 derart ausgebildet, dass sie eine Vielzahl von auftretenden Fehlern durch entsprechende Ansteuerung der Düsenreihen 46, 47 und 48 und/oder durch geeignete Verschiebung des Tintenstrahldrucckopfs 44 parallel zur Rotationsachse 5 ausgleichen kann.

Eine vorteilhafte Vorgehensweise für eine optische Inspektion der Oberfläche des zylindrischen Gegenstands 6 mit Hilfe der in den Figuren 2 und 3 dargestellten Inspektionseinrichtung 11 sieht vor, dass zunächst der vom Werkstückrundtisch 3 antransportierte zylindrische Gegenstand, dessen rotatorische Lage eindeutig festliegt und vor der Untersuchung durch die Inspektionseinrichtung 14 nicht neuerlich ermittelt werden muss, im ruhenden Zustand mit Hilfe der zweiten Kamera 22 abgetastet wird. Hierbei sind der zylindrische Gegenstand 6 und die zweite Kamera 22 derart zueinander ausgerichtet, dass die lichtempfindlichen Zellen 32 der zweiten Kamera 22 den Referenzbereich 51 des zylindrischen Gegenstands 6 mit einer einzigen Aufnahme vollständig abtasten können.

In einem nachfolgenden Schritt wird mit Hilfe der Antriebseinrichtung für die Werkstückaufnahme 4 eine Rotation des zylindrischen Gegenstands 6 um die Rotationsachse 5 eingeleitet und eine optische Inspektion der Oberfläche des zylindrischen Gegenstands 6 mit Hilfe der ersten Kamera 21 vorgenommen. Da die Antriebseinrichtung für die Werkstückaufnahme 4 exemplarisch eine exakte Information über die Winkellage des zylindrischen Gegenstands 6 um die Rotationsachse 5 bereitstellen kann, ist eine optische Abtastung der Oberfläche des zylindrischen Gegenstands 6 auch während einer Beschleunigungsphase für die Werkstückaufnahme 4 möglich. Hierzu wird die Abtastrate der ersten Kamera von der Steuereinrichtung 41 derart an die Winkelgeschwindigkeit des zylindrischen Gegenstands 6 angepasst, dass aufeinanderfolgende linienförmige Abtastausschnitte zu einem vollständigen Gesamtbild von der Oberfläche des zylindrischen Gegenstands 6 verarbeitet werden können. Ferner ist exemplarisch vorgesehen, dass eine vollständige Abtastung des zylindrischen Gegenstands 6 mit einer einzigen Umdrehung um die Rotationsachse 5 durchgeführt werden kann.

Bei einer nicht dargestellten Ausführungsform der Inspektionseinrichtung kann eine, insbesondere in radialer Richtung auszuführende, Relativbewegung der jeweiligen Kamera zum zylindrischen Gegenstand vorgesehen sein, um eine Anpassung an unterschiedliche Durchmesser des zylindrischen Gegenstands zu ermöglichen.

Nach der Abtastung der Oberfläche des zylindrischen Gegenstands 6 werden die ermittelten Signale der ersten Kamera 21 und der zweiten Kamera 22 in der Steuereinrichtung 41 verarbeitet und durch die geeignete Berechnungsmethoden eine Einhaltung von vorgebbaren Kriterien überprüft. Sofern sich im Zuge dieser Überprüfung eine unerwünschte Abweichung ergeben sollte, können mit Hilfe der Steuereinrichtung 41 und des jeweiligen Drucksystems 42, 43 geeignete Maßnahmen getroffen werden, um beispielsweise Düsenausfälle am Tintenstrahldrucckopf 44 zu kompensieren.

Ergänzend oder alternativ kann vorgesehen sein, die Inspektionseinrichtung 11 für eine Kontrolle einer Beschichtung des zylindrischen Gegenstands 6 einzusetzen. Hierbei kann vorgesehen werden, das zweite Beleuchtungselemente 24 zeitweilig zu deaktivieren und das erste Beleuchtungselement 23 zeitweilig zu aktivieren, dessen Beleuchtungshauptachse 39 derart gegenüber der ersten Kamera 21 und dem zylindrischen Gegenstand 6 ausgerichtet ist, so dass die vom ersten Beleuchtungselement 23 ausgegebenen Lichtstrahlen zumindest überwiegend an der Oberfläche des zylindrischen Gegenstands 6 reflektiert werden und von der ersten Kamera 21 aufgenommen werden können. Dementsprechend kann im Zuge einer Rotation des zylindrischen Gegenstands 6 um die Rotationsachse 5 eine Inspektion des zylindrischen Gegenstands 6 im Reflexionslichtverfahren vorgenommen werden.

Bei einer alternativen Vorgehensweise wird zunächst während einer Rotation des zylindrischen Gegenstands eine Abtastung der Oberfläche des zylindrischen Gegenstands 6 mit Hilfe der ersten Kamera 21 vorgenommen. Vorzugsweise wird bei dieser Vorgehensweise bereits während der Erfassung der Oberfläche des zylindrischen Gegenstands 6 eine Auswertung der Abtastsignale der ersten Kamera 21 in der Steuereinrichtung 41 vorgenommen, wobei im Rahmen dieser Auswertung auch die räumliche Anordnung des Referenzbereichs 51 ermittelt wird. Anhand der ermittelten räumlichen Anordnung des Referenzbereichs 51 kann der zylindrische Gegenstand 6 dann in einem nachfolgenden Inspektionsschritt derart gegenüber der zweiten Kamera 22 positioniert werden, dass diese den Referenzbereich in vorteilhafter Weise abtasten kann.

## Patentansprüche

1. Inspektionseinrichtung für eine optische Inspektion einer Oberfläche eines zumindest im Wesentlichen zylindrischen Gegenstands (6), mit einer ersten Kamera (21) zur Abtastung eines ersten Oberflächenbereichs eines zylindrischen Gegenstands (6) mit einem ersten Abtastausschnitt, der eine erste, linienartige Abtastgeometrie (30) aufweist und mit einer zweiten Kamera (22) zur Abtastung eines zweiten Oberflächenbereichs (51) des gleichen zylindrischen Gegenstands (6) mit einem zweiten Abtastausschnitt, der eine zweite, flächige Abtastgeometrie (31) aufweist, sowie mit einer Verarbeitungseinrichtung (41), die mit der ersten und mit der zweiten Kamera (21, 22) elektrisch verbunden ist und die zur Verarbeitung von Abtastsignalen der ersten Kamera (21) und der zweiten Kamera (22) ausgebildet ist, wobei die erste Kamera (21) und die Steuereinrichtung (41) derart ausgebildet sind, dass eine Abtastrate der ersten Kamera (21) von der Steuereinrichtung (41) an eine Winkelgeschwindigkeit des zylindrischen Gegenstands (6) angepasst wird, so dass aufeinanderfolgende linienförmige Abtastausschnitte zu einem vollständigen Gesamtbild von der Oberfläche des zylindrischen Gegenstands (6) verarbeitet werden.

2. Inspektionseinrichtung nach Anspruch 1, **dadurch gekennzeichnet, dass** eine optische Achse (36) der ersten Kamera (21) und eine optische Achse (37) der zweiten Kamera (22) einen spitzen Winkel (38) zueinander einnehmen.

3. Inspektionseinrichtung nach Anspruch 2, **dadurch gekennzeichnet, dass** ein Schnittpunkt der optischen Achsen (36, 37) der ersten und zweiten Kamera (21, 22) in einem zylindrischen Raumvolumen angeordnet ist, das einer räumlichen Ausdehnung des abzutastenden zylindrischen Gegenstands (6) entspricht.

4. Inspektionseinrichtung nach Anspruch 1, 2 oder 3, **dadurch gekennzeichnet, dass** die erste Kamera (21) wenigstens eine, insbesondere genau eine, Zeile von aneinander gereihten lichtempfindlichen Zellen (28) umfasst, wobei die lichtempfindlichen Zellen (28) einer Zeile eine Hauptachse (27) der ersten Abtastgeometrie bestimmen.

5. Inspektionseinrichtung nach Anspruch 4, **dadurch gekennzeichnet, dass** der erste Abtastausschnitt längs der Hauptachse (27) der ersten Abtastgeometrie (30) wenigstens 1000, vorzugsweise wenigstens 2000, besonders bevorzugt wenigstens 4000, insbesondere wenigstens 8000 lichtempfindliche Zellen (28) aufweist.

6. Inspektionseinrichtung nach einem der vorhergehenden Ansprüche, **dadurch gekennzeichnet, dass** der zweite Abtastausschnitt als Matrix von lichtempfindlichen Zellen (32) ausgebildet ist, wobei die lichtempfindlichen Zellen (32) in der Matrix in wenigstens zwei Spalten und wenigstens zwei senkrecht zu den Spalten ausgerichteten Zeilen angeordnet sind.

7. Inspektionseinrichtung nach Anspruch 6, **dadurch gekennzeichnet, dass** für die zweite Kamera (22) ein Verhältnis einer Anzahl von lichtempfindlichen Zellen (32) in den Spalten und einer Anzahl von lichtempfindlichen Zellen (32) in den Zeilen zwischen 1 und 10 vorgesehen ist.

8. Inspektionseinrichtung nach einem der vorhergehenden Ansprüche, **dadurch gekennzeichnet, dass** den Kameras (21, 22) eine Beleuchtungseinrichtung (34) zugeordnet ist, die für eine wahlweise Beleuchtung des zylindrischen Gegenstands (6) längs einer ersten Beleuchtungshauptachse (39) oder längs einer zweiten Beleuchtungshauptachse (40) ausgebildet ist, wobei die erste und die zweite Beleuchtungshauptachse (39, 40) einen Winkel zueinander einnehmen.

9. Inspektionseinrichtung nach einem der vorhergehenden Ansprüche, **dadurch gekennzeichnet, dass** die Kameras (21, 22) an einem Grundkörper festgelegt sind und dass am Grundkörper wenigstens ein Stellmittel für eine fernsteuerbare, insbesondere elektrisch einstellbare, Positionsänderung für wenigstens eine Kamera (21, 22) relativ zum Grundkörper ausgebildet ist.

10. Inspektionseinrichtung nach Anspruch 8 und 9, **dadurch gekennzeichnet, dass** die Beleuchtungseinrichtung (34) ortsfest am Grundkörper angeordnet ist und wenigstens zwei, jeweils separat ansteuerbare Gruppen (23, 24) von Leuchtmitteln (35) umfasst, die unterschiedlich ausgerichtet sind, und die die erste und die zweite Beleuchtungshauptachse (39, 40) bestimmen.

11. Verfahren zur optischen Inspektion einer Oberfläche eines zylindrischen Gegenstands mit den Schritten: Erfassen eines am zylindrischen Gegenstand (6) ausgebildeten Referenzbereichs (51) bei ruhendem zylindrischen Gegenstand mit einer zweiten Kamera (22), die einen Abtastausschnitt mit einer flächigen Abtastgeometrie (31) aufweist und Erfassen einer Oberfläche des zylindrischen Gegenstands bei rotierendem zylindrischen Gegenstand mit einer ersten Kamera (21), die einen Abtastausschnitt mit einer linienförmigen Abtastgeometrie (30) aufweist, wobei eine Rotationsgeschwindigkeit des Gegenstands (6) und eine Abtastrate der ersten Kamera (21) mit linienförmiger Abtastgeometrie (30) derart aufeinander angepasst sind, dass eine vollständige Erfassung der Oberfläche des Gegenstands (6) gewährleistet ist, wobei eine Abtastrate der ersten Kamera (21) von der Steuereinrichtung (41) derart an eine Winkelgeschwindigkeit des zylindrischen Gegenstands (6) angepasst wird, dass von der ersten Kamera (21) abgetastete, aufeinanderfolgende linienförmige Abtastausschnitte zu einem vollständigen Gesamtbild von der Oberfläche des zylindrischen Gegenstands (6) verarbeitet werden.

12. Verfahren nach Anspruch 11, **dadurch gekennzeichnet, dass** in Abhängigkeit von einem Abtastergebnis, das mit wenigstens einer Kamera (21, 22) bei der Abtastung der Oberfläche des zylindrischen Gegenstands (6) ermittelt wurde, eine Ansteuerung eines Tintenstrahldruckkopfs (44) zur Kompensation von Druckfehlern vorgenommen wird.

13. Digitale Tintenstrahldruckeinrichtung für eine Bedruckung einer Oberfläche eines zylindrischen Gegenstands (6) mit einem Dekor, mit einem Maschinengestell, an dem ein drehbar gelagerter Werkstückrundtisch (3) und mehrere ortsfeste Arbeitsstationen (8 - 18) angebracht sind, wobei der Werkstückrundtisch (3) mehrere drehbar gelagerte und individuell angetriebene Werkstückaufnahmen (4) zur Aufnahme von hülsenförmigen Werkstücken (6) aufweist, wobei eine erste Arbeitsstation (10) als Druckeinheit ausgebildet ist, die einen Tintenstrahldruckkopf (44) umfasst, der zur Abgabe von Tintentropfen auf eine Oberfläche des zylindrischen Gegenstands (6) ausgebildet ist, sowie mit einer zweiten Arbeitsstation (11), die als Inspektionseinrichtung nach einem der Ansprüche 1 bis 10 ausgebildet ist.

14. Digitale Tintenstrahldruckeinrichtung nach Anspruch 13, **dadurch gekennzeichnet, dass** eine Ansteuereinheit (41) für den Tintenstrahldruckkopf (44) und die Verarbeitungseinrichtung für die Signale der Kameras (21, 22) der Inspektionseinrichtung (11) derart elektrisch verbunden und aneinander angepasst sind, dass bei einer Detektion von Druckfehlern auf der Oberfläche des zylindrischen Gegenstands (6) durch die Inspektionseinrichtung (11) eine Veränderung einer Tintenabgabe durch den Tintenstrahldruckkopf (44) erfolgt, um eine zumindest teilweise Kompensation der detektierten Druckfehler bei einem nachfolgenden Bedruckungsvorgang zu gewährleisten.

15. Digitale Tintenstrahldruckeinrichtung nach Anspruch 14, **dadurch gekennzeichnet, dass** der Tintenstrahldruckkopf (44) und/oder die Kameras (21, 22) der Inspektionseinrichtung (11) beweglich am Maschinengestell gelagert sind, um eine Anpassung an unterschiedliche Größen des zylindrischen Gegenstands (6) zu ermöglichen.

## Claims

1. Inspection device for optical inspection of a surface of an at least substantially cylindrical object (6), having a first camera (21) for scanning a first surface region of a cylindrical object (6) with a first scanning section which has a first, line-like scanning geometry (30), and having a second camera (22) for scanning a second surface region (51) of the same cylindrical object (6) with a second scanning section which has a second, planar scanning geometry (31), further comprising a processing device (41) which is electrically connected to the first camera (21) and to the second camera (22) and which is designed for processing scanning signals from the first camera (21) and from the second camera (22), wherein the first camera (21) and the control device (41) being designed in such a way that a scanning rate of the first camera (21) is adapted by the control device (41) to an angular velocity of the cylindrical object (6), so that successive line-shaped scanning sections are processed to form a complete overall image of the surface of the cylindrical object (6).

2. Inspection device according to claim 1, **characterized in that** an optical axis (36) of the first camera (21) and an optical axis (37) of the second camera (22) assume an acute angle (38) with respect to each other.

3. Inspection device according to claim 2, **characterized in that** an intersection of the optical axes (36, 37) of the first and second cameras (21, 22) is arranged in a cylindrical spatial volume corresponding to a spatial extent of the cylindrical object (6) to be scanned.

4. Inspection device according to claim 1, 2 or 3, **characterized in that** the first camera (21) comprises at least one, in particular exactly one, row of light-sensitive cells (28) arranged in a row, the light-sensitive cells (28) of a row determining a main axis (27) of the first scanning geometry.

5. Inspection device according to claim 4, **characterized in that** the first scanning section has at least 1000, preferably at least 2000, particularly preferably at least 4000, in particular at least 8000 light-sensitive cells (28) which are arranged along the main axis (27) of the first scanning geometry (30) .

6. Inspection device according to one of the preceding claims, **characterized in that** the second scanning section is formed as a matrix of light-sensitive cells (32), the light-sensitive cells (32) being arranged in the matrix in at least two columns and at least two rows aligned perpendicular to the columns.

7. Inspection device according to claim 6, **characterized in that** for the second camera (22) a ratio of a number of light-sensitive cells (32) in the columns and a number of light-sensitive cells (32) in the rows between 1 and 10 is provided.

8. Inspection device according to one of the preceding claims, **characterized in that** the cameras (21, 22) are associated with an illumination device (34) designed for selectively illuminating the cylindrical object (6) along a first illumination main axis (39) or along a second illumination main axis (40), the first and second illumination main axes (39, 40) being at an angle to each other.

9. Inspection device according to one of the preceding claims, **characterized in that** the cameras (21, 22) are fixed to a base body and **in that** at least one actuating means for a remotely controllable, in particular electrically adjustable, change in position for at least one camera (21, 22) relative to the base body is formed on the base body.

10. Inspection device according to claim 8 and 9, **characterized in that** the illumination device (34) is arranged stationarily on the base body and comprises at least two groups (23, 24) of illuminating means (35) which can each be controlled separately, are oriented differently and determine the first and the second illumination main axis (39, 40).

11. Method for optical inspection of a surface of a cylindrical object with the steps: detecting a reference area (51) formed on the cylindrical object (6) when the cylindrical object is stationary using a second camera (22), which has a scanning section with a planar scanning geometry (31), and detecting a surface of the cylindrical object when the cylindrical object is rotating with a first camera (21), which has a scanning section with a line-shaped scanning geometry (30), wherein a rotational speed of the object (6) and a scanning rate of the first camera (21) with line-shaped scanning geometry (30) being matched to one another in such a manner that a complete detection of the surface of the object (6) is ensured, wherein a scanning rate of the first camera (21) is adapted by the control device (41) to an angular velocity of the cylindrical object (6) in such a way that successive line-shaped scanning sections scanned by the first camera (21) are processed to form a complete overall image of the surface of the cylindrical object (6).

12. Method according to claim 11, **characterized in that**, in dependence on a scanning result determined by at least one camera (21, 22) during the scanning of the surface of the cylindrical object (6), a control of an inkjet print head (44) for compensation of printing errors is performed.

13. Digital ink-jet printing device for printing a decoration on a surface of a cylindrical object (6), having a machine frame on which a rotatably mounted workpiece rotary table (3) and a plurality of stationary work stations (8 - 18) are mounted, the workpiece rotary table (3) having a plurality of rotatably mounted and individually driven workpiece holders (4) for holding sleeve-shaped workpieces (6), wherein a first work station (10) is configured as a printing unit comprising an ink jet print head (44) configured to discharge ink drops onto a surface of the cylindrical object (6), and with a second work station (11) configured as an inspection device according to any one of claims 1 to 10.

14. Digital ink-jet printing device according to claim 13, **characterized in that** a drive unit (41) for the ink-jet print head (44) and the processing device for the signals of the cameras (21, 22) of the inspection device (11) are electrically connected and adapted to one another in such a way that, upon detection of printing defects on the surface of the cylindrical object (6) by the inspection device (11), a change in an ink delivery by the ink-jet print head (44) takes place in order to ensure at least partial compensation of the detected printing defects in a subsequent printing operation.

15. Digital ink-jet printing device according to claim 14, **characterized in that** the ink-jet print head (44) and/or the cameras (21, 22) of the inspection device (11) are movably mounted on the machine frame to enable adaptation to different sizes of the cylindrical object (6).

## Revendications

1. Dispositif d'inspection pour une inspection optique d'une surface d'un objet (6) au moins sensiblement cylindrique, avec une première caméra (21) pour le balayage d'une première zone de surface d'un objet (6) cylindrique avec une première section de balayage, qui présente une première géométrie de balayage (30) linéaire et avec une seconde caméra (22) pour le balayage d'une seconde zone de surface (51) du même objet (6) cylindrique avec une seconde section de balayage qui présente une seconde géométrie de balayage (31) plane, ainsi qu'avec un dispositif de traitement (41) qui est relié électriquement à la première et à la seconde caméra (21, 22) et qui est réalisé pour le traitement de signaux de balayage de la première caméra (21) et de la seconde caméra (22), dans lequel la première caméra (21) et le dispositif de commande (41) sont réalisés de telle manière qu'un taux de balayage de la première caméra (21) du dispositif de commande (41) soit adapté à une vitesse angulaire de l'objet (6) cylindrique de sorte que des sections de balayage linéaires consécutives soient traitées en une image globale complète de la surface de l'objet (6) cylindrique.

2. Dispositif d'inspection selon la revendication 1, **caractérisé en ce qu'**un axe optique (36) de la première caméra (21) et un axe optique (37) de la seconde caméra (22) occupent un angle aigu (38) l'un par rapport à l'autre.

3. Dispositif d'inspection selon la revendication 2, **caractérisé en ce qu'**une intersection des axes optiques (36, 37) des première et seconde caméras (21, 22) est agencée dans un volume spatial cylindrique qui correspond à une étendue spatiale de l'objet (6) cylindrique à balayer.

4. Dispositif d'inspection selon la revendication 1, 2 ou 3, **caractérisé en ce que** la première caméra (21) comporte au moins une, en particulier précisément une, ligne de cellules (28) sensibles à la lumière juxtaposées les unes aux autres, dans lequel les cellules (28) sensibles à la lumière d'une ligne déterminent un axe principal (27) de la première géométrie de balayage.

5. Dispositif d'inspection selon la revendication 4, **caractérisé en ce que** la première section de balayage présente le long de l'axe principal (27) de la première géométrie de balayage (30) au moins 1 000, de préférence au moins 2 000, de manière particulièrement préférée au moins 4 000, en particulier au moins 8 000 cellules (28) sensibles à la lumière.

6. Dispositif d'inspection selon l'une des revendications précédentes, **caractérisé en ce que** la seconde section de balayage est réalisée en tant que matrice de cellules (32) sensibles à la lumière, dans lequel les cellules (32) sensibles à la lumière sont agencées dans la matrice dans au moins deux colonnes et au moins deux lignes orientées perpendiculairement aux colonnes.

7. Dispositif d'inspection selon la revendication 6, **caractérisé en ce que** pour la seconde caméra (22) un rapport d'un nombre de cellules (32) sensibles à la lumière dans les colonnes et un nombre de cellules (32) sensibles à la lumière dans les lignes est prévu entre 1 et 10.

8. Dispositif d'inspection selon l'une des revendications précédentes, **caractérisé en ce qu'**un dispositif d'éclairage (34) est associé aux caméras (21, 22), qui est réalisé pour un éclairage au choix de l'objet (6) cylindrique le long d'un premier axe principal d'éclairage (39) ou le long d'un second axe principal d'éclairage (40), dans lequel le premier et le second axe principal d'éclairage (39, 40) occupent un angle l'un par rapport à l'autre.

9. Dispositif d'inspection selon l'une des revendications précédentes, **caractérisé en ce que** les caméras (21, 22) sont fixées à un corps de base et qu'au moins un moyen de réglage pour une modification de position télécommandable, réglable en particulier électriquement est réalisé pour au moins une caméra (21, 22) par rapport au corps de base au niveau du corps de base.

10. Dispositif d'inspection selon les revendications 8 et 9, **caractérisé en ce que** le dispositif d'éclairage (34) est agencé fixement au niveau du corps de base et comporte au moins deux groupes (23, 24) commandables respectivement séparément de moyens d'éclairage (35) qui sont orientés différemment, et qui déterminent le premier et le second axe principal d'éclairage (39, 40).

11. Procédé d'inspection optique d'une surface d'un objet cylindrique avec les étapes : de détection d'une zone de référence (51) réalisée au niveau de l'objet (6) cylindrique pour un objet cylindrique fixe avec une seconde caméra (22) qui présente une section de balayage avec une géométrie de balayage plane (31) et de détection d'une surface de l'objet cylindrique en cas d'objet cylindrique rotatif avec une première caméra (21) qui présente une section de balayage avec une géométrie de balayage (30) linéaire, dans lequel une vitesse de rotation de l'objet (6) et un taux de balayage de la première caméra (21) avec une géométrie de balayage (30) linéaire sont adaptés l'un à l'autre de telle manière qu'une détection complète de la surface de l'objet (6) soit garantie, dans lequel un taux de balayage de la première caméra (21) est adapté par le dispositif de commande (41) à une vitesse angulaire de l'objet (6) cylindrique de telle manière que des sections de balayage linéaires consécutives, balayées par la première caméra (21), soient traitées en une image globale complète de la surface de l'objet (6) cylindrique.

12. Procédé selon la revendication 11, **caractérisé en ce qu'**en fonction d'un résultat de balayage qui a été déterminé avec au moins une caméra (21, 22) lors du balayage de la surface de l'objet (6) cylindrique, une commande d'une tête d'impression à jet d'encre (44) est entreprise pour la compensation d'erreurs d'impression.

13. Dispositif d'impression à jet d'encre numérique pour une impression d'une surface d'un objet (6) cylindrique avec un décor, avec un bâti de machine, au niveau duquel une table ronde de pièce (3) logée de manière à pouvoir tourner et plusieurs postes de travail (8-18) fixes sont montés, dans lequel la table ronde de pièce (3) présente plusieurs logements de pièce (4) logés de manière à pouvoir tourner et entraînés individuellement pour la réception de pièces (6) en forme de douille, dans lequel un premier poste de travail (10) est réalisé en tant qu'unité d'impression qui comporte une tête d'impression à jet d'encre (44) qui est réalisée pour la sortie de gouttes d'encre sur une surface de l'objet (6) cylindrique, ainsi qu'avec un second poste de travail (11), qui est réalisé en tant que dispositif d'inspection selon l'une des revendications 1 à 10.

14. Dispositif d'impression à jet d'encre numérique selon la revendication 13, **caractérisé en ce qu'**une unité de commande (41) pour la tête d'impression à jet d'encre (44) et le dispositif de traitement pour les signaux des caméras (21, 22) du dispositif d'inspection (11) sont reliés électriquement et sont adaptés l'un à l'autre de telle manière que pour une détection d'erreurs d'impression sur la surface de l'objet (6) cylindrique par le dispositif d'inspection (11) une modification d'une sortie d'encre soit effectuée par la tête d'impression à jet d'encre (44) afin de garantir une compensation au moins partielle des erreurs d'impression détectées en cas de processus d'impression suivant.

15. Dispositif d'impression à jet d'encre numérique selon la revendication 14, **caractérisé en ce que** la tête d'impression à jet d'encre (44) et/ou les caméras (21, 22) du dispositif d'inspection (11) sont logées de manière mobile au niveau du bâti de machine afin de permettre une adaptation aux différentes grandeurs de l'objet (6) cylindrique.
